(19) **Europäisches Patentamt European Patent Office Office européen des brevets**

(11) **EP 1 816 183 B1**

(12) **EUROPEAN PATENT SPECIFICATION**

(45) Date of publication and mention
of the grant of the patent:
**22.06.2011 Bulletin 2011/25**

(51) Int Cl.:
*C10M 163/00* *(2006.01)*   *C10M 141/10* *(2006.01)*
*C10M 169/04* *(2006.01)*   *F16D 27/115* *(2006.01)*
*C10M 105/04* *(2006.01)*   *C10M 107/02* *(2006.01)*
*C10M 129/10* *(2006.01)*   *C10M 129/54* *(2006.01)*
*C10M 135/10* *(2006.01)*   *C10M 137/00* *(2006.01)*
*C10M 159/22* *(2006.01)*   *C10M 159/24* *(2006.01)*
*C10N 10/04* *(2006.01)*   *C10N 20/02* *(2006.01)*
*C10N 30/00* *(2006.01)*   *C10N 30/06* *(2006.01)*
*C10N 40/04* *(2006.01)*   *C10N 60/02* *(2006.01)*

(21) Application number: **05809429.3**

(22) Date of filing: **24.11.2005**

(86) International application number:
**PCT/JP2005/021570**

(87) International publication number:
**WO 2006/057292 (01.06.2006 Gazette 2006/22)**

(54) **DRIVING FORCE TRANSMITTING SYSTEM AND LUBRICANT COMPOSITION FOR THIS SYSTEM**

ANTRIEBSKRAFTÜBERTRAGUNGSSYSTEM UND SCHMIERSTOFFZUSAMMENSETZUNG DAFÜR

SYSTÈME DE TRANSMISSION DE FORCE D'ENTRAINEMENT ET COMPOSITION DE LUBRIFIANT POUR CE SYSTÈME

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.11.2004 JP 2004343035**

(43) Date of publication of application:
**08.08.2007 Bulletin 2007/32**

(73) Proprietors:
• **Nippon Oil Corporation**
 **Tokyo 105-8412 (JP)**
• **JTEKT Corporation**
 **Osaka-shi**
 **Osaka 542-8502 (JP)**

(72) Inventors:
• **TAKAHASHI, Masato**
 **Yokohama-shi,**
 **Kanagawa 2310815 (JP)**
• **KUROSAWA, Osamu**
 **Yokohama-shi,**
 **Kanagawa 2310815 (JP)**
• **ANDO, Junji**
 **Osaka-shi,**
 **Osaka 542-8502 (JP)**

• **SAITO, Toshiyuki**
 **Osaka-shi,**
 **Osaka 542-8502 (JP)**
• **KUWABARA, Hirofumi**
 **Osaka-shi,**
 **Osaka 542-8502 (JP)**
• **FUKAMI, Hajime**
 **Osaka-shi, Osaka 542-8502 (JP)**
• **SAKAI, Toshifumi**
 **Osaka-shi,**
 **Osaka 542-8502 (JP)**
• **FURUHASHI, Mototake**
 **Osaka-shi,**
 **Osaka 542-8502 (JP)**

(74) Representative: **Grünecker, Kinkeldey, Stockmair & Schwanhäusser Anwaltssozietät Leopoldstrasse 4 80802 München (DE)**

(56) References cited:
**JP-A- 8 319 493     JP-A- 2000 087 061
JP-A- 2000 303 085     JP-A- 2001 279 286
JP-A- 2001 288 488     JP-A- 2001 342 485
JP-A- 2001 354 988     JP-A- 2002 003 875
JP-A- 2003 028 218     JP-A- 2003 041 283**

JP-A- 2003 073 683    JP-A- 2003 113 391
JP-A- 2003 343 597    JP-A- 2004 083 891

- **RONALD L SHUBKIN: "Polyalphaolefins" CRC HANDBOOK OF LUBRICATION AND TRIBOLOGY: THEORY OF TRIBOLOGY,, 1 January 1993 (1993-01-01), pages 219-236, XP009108705**

Remarks:
    The file contains technical information submitted after the application was filed and not included in this specification

## Description

### Technical Field

The present invention relates to a lubricating oil composition and to a driving force transmitting system wherein lubrication of the sliding surface of a sliding member is accomplished with the lubricating oil composition.

### Background Art

In conventional driving force transmitting systems for distribution of driving force to front and rear wheels or distribution of driving force to right and left wheels of vehicles, for example, lubricating oils have been applied to the frictional sliding surfaces of sliding members such as clutch discs that transmit driving force, for lubrication and prevention of seizure of the sliding members. In such driving force transmitting systems, the properties of the lubricating oil deteriorate with prolonged use, and a stick-slip phenomenon is produced on the frictional sliding surface (a jerky sliding movement caused by repeated intermittent activation/halting), resulting in slight irregular vibration during running of the vehicle.

Various attempts have been made to inhibit deterioration in the lubricating oil properties and prolong the life of such devices. For example, Patent document 1 discloses a driving force transmitting system applied with a dry film of molybdenum disulfide or polytetrafluoroethylene on the sliding surface of an iron clutch disc, wherein the clutch disc is frictionally slid in a lubricating oil containing a succinimide dispersant which improves the deterioration in properties of the lubricating oil due to wear debris of iron generated with wear of the clutch disc.

EP-A-1422287 relates to lubricating oil compositions for automatic transmissions, which are capable of preventing the occurrence of scratch noise.

US 2004/0192562 describes lubricating oil compositions having excellent long-lasting anti-shutter properties.

EP-A-1367279 and EP-A-1571365 disclose a friction clutch and a clutch plate that is resistant to wear and excellent in durability.

[Patent document 1] Japanese Unexamined Patent Publication No. 2003-65359

### Disclosure of the Invention

<u>Problems to be Solved by the Invention</u>

With the driving force transmitting system described in Patent document 1, however, it is impossible to avoid a certain amount of cost increase as a result of the dry film of molybdenum disulfide or polytetrafluoroethylene on the sliding surface of the clutch disc. When such a dry film is applied to an electromagnetic clutch (see the working examples of Patent document 1) which operates by an electromagnet and has its magnetic path partly formed by the clutch disc, the reduction in magnetic permeability due to the thickness of the dry film inhibits the frictional engaging force between the clutch disc. Formation of the dry film also lowers the frictional coefficient of the sliding surface.

It is an object of the present invention, which has been accomplished in light of the circumstances described above, to provide a lubricating oil composition that exhibits adequate antiwear property and stick-slip prevention while also maintaining a high level of these properties over prolonged periods, as well as a driving force transmitting system employing the lubricating oil composition.

<u>Means for Solving the Problems</u>

The object of the present invention has been solved on the basis of claims 1 to 5. The present inventors have discovered that a lubricating oil composition containing a lubricating base oil, a phosphorus compound and a specific organic acid salt can solve the aforementioned problems if the contents of the phosphorus compound and the organic acid salt satisfy specific conditions, and the invention has been completed upon this discovery.

The invention provides a driving force transmitting system wherein driving force is transmitted by sliding of a sliding member consisting mainly of iron, the driving force transmitting system being characterized in that a lubricating oil composition of the invention exists on the sliding surface of the sliding member, wherein the lubricating oil composition comprises a lubricating base oil, a phosphorus compound and at least one organic acid salt selected from among alkaline earth metal sulfonates, alkaline earth metal phenates and alkaline earth metal salicylates, wherein the contents of the phosphorus compound and organic acid salt satisfy the conditions represented by the following formulas (1), (2) and (3):

$$0.01 \leq W(P) \leq 0.2 \qquad (1)$$

$$0.01 \leq W(M) \leq 0.2 \qquad (2)$$

$$0.1 \leq W(P)/W(M) \leq 10 \qquad (3)$$

wherein W(P) represents the content of phosphorus compound, in terms of phosphorus element, based on the total amount of the lubricating oil composition, and W(M) represents the content of organic acid salt content, in terms of alkaline earth metal elements, based on the total amount of the lubricating oil composition, characterized in that the lubricating base oil consists of at least 90% by mass of a poly-$\alpha$-olefin and/or its hydrogenated compound, based on the total amount of the lubricating base oil.

According to the lubricating oil composition of the invention, a phosphorus compound and the specific organic acid salt described above are added so that the phosphorus element content of the phosphorus compound and the alkaline earth metal element content of the organic acid salt satisfy the conditions represented by formulas (1)-(3) above, thereby allowing satisfactory improvement in antiwear property and stick-slip prevention. The excellent antiwear property of the lubricant composition of the invention can adequately prevent reduction in antiwear property and stick-slip prevention for prolonged periods that occurs due to increasing concentration of wear debris in the oil, even in case where a small amount of lubricating oil is used.

Also according to the invention, the kinematic viscosity of the lubricating oil composition at 100°C is preferably 2-20 mm$^2$/s, and the BF viscosity at -40°C is preferably no greater than 20,000 mPa.s.

The invention still further provides a driving force transmitting system wherein driving force is transmitted by sliding between a sliding member having an amorphous hard carbon film formed on the surface of a base material and a sliding member consisting mainly of iron, the driving force transmitting system being characterized in that a lubricating oil composition of the invention exists on the sliding surface between the sliding members.

By using a lubricating oil composition of the invention in a driving force transmitting system, it is possible to realize a driving force transmitting system with high performance and long life, whereby wear of the sliding members and occurrence of the stick-slip phenomenon can be adequately prevented for prolonged periods.

In the latter driving force transmitting system, the amorphous hard carbon film preferably contains 1-80 % by mass silicon, and the surface roughness on the sliding surface side of the amorphous hard carbon film is preferably 0.3-10 $\mu$mRz.

**Effect of the Invention**

According to the invention it is possible to realize a lubricating oil composition which exhibits sufficient antiwear property and stick-slip prevention in driving force transmitting systems and can maintain a high level of these properties for prolonged periods. The invention also makes it possible to realize a driving force transmitting system with high performance and long life, whereby wear of the sliding members and occurrence of the stick-slip phenomenon can be adequately prevented for prolonged periods.

**Brief Description of the Drawings**

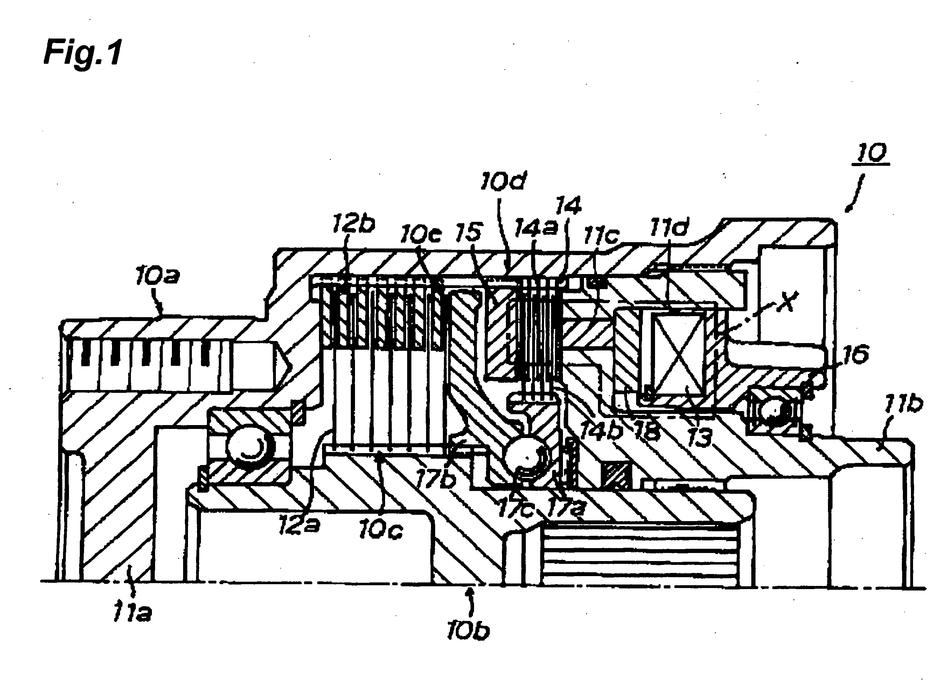

Fig. 1 is an essential cross-sectional view of an embodiment of a driving force transmitting system (electronic control coupling).

Explanation of Symbols

10: Driving force transmitting system, 10a: outer case, 10b: inner shaft, 10c: main clutch, 10d: pilot clutch mechanism, 10e: cam mechanism, 11a: housing, 11b: rear cover, 11c: cylinder, 11d: recess, 12a: main inner clutch plate, 12b: main outer clutch plate, 13: electromagnet, 14: pilot clutch, 14a: pilot outer clutch plate, 14b: pilot inner clutch plate, 15: armature, 16: yoke, 17a: first cam member, 17b: second cam member, 17c: cam follower, 18: copper ring.

**Best Mode for Carrying Out the Invention**

Preferred embodiments of the invention will now be described in detail.

The lubricating base oil used in the lubricating oil composition of the invention may be any mineral oil and/or synthetic oil used as a base oil in ordinary lubricating oils.

As specific examples of mineral oils there may be mentioned paraffinic mineral oils or naphthenic mineral oils which are lube-oil distillates obtained by atmospheric distillation and vacuum distillation of crude oil, with refinement by appropriate combinations of refining treatments such as solvent deasphalting, solvent extraction, hydrocracking, solvent dewaxing, catalytic dewaxing, hydrogenation refining, sulfuric acid treating and white clay treatment, as well as normal paraffins and the like. In addition, a wax obtained by a dewaxing process or a Fischer-Tropsch wax obtained by a GTL (gas-to-liquid) process may be isomerized or decomposed to obtain a product for use as a lubricating base oil according to the invention.

When a mineral oil is used as the lubricating base oil of the invention, the paraffin portion of the mineral oil is not particularly restricted, but the %Cp is preferably 70 or greater and more preferably 75 or greater. The term "%Cp" used here refers to the percentage of the number of paraffin carbon atoms with respect to the total number of carbon atoms, as determined by a method conforming to ASTM D 3238.

As synthetic oils there may be used, without any particular restriction thereto, poly-$\alpha$-olefins (1-octene oligomers, 1-decene oligomers, ethylene-propylene oligomers and the like) and their hydrogenated compounds. There are no particular restrictions on the blend ratio when using poly-$\alpha$-olefins and their hydrogenated compounds, but they are used as the major component of the lubricating base oil, the proportion is at least 90 % by mass based on the total amount of the lubricating base oil, and most preferably the lubricating base oil consists entirely of a poly-$\alpha$-olefin and/or its hydrogenated compound.

The kinematic viscosity of the lubricating base oil may be as desired without any particular restrictions, but normally the kinematic viscosity at 100°C is preferably 1-10 mm$^2$/s and even more preferably 2-8 mm$^2$/s.

As phosphorus compounds to be used for the invention there may be mentioned phosphoric acid, phosphorous acid, zinc alkyldithiophosphates, phosphoric acid monoesters, phosphoric acid diesters, phosphoric acid triesters, phosphorous acid monoesters, phosphorous acid diesters, phosphorous acid triesters, thiophosphoric acid, thiophosphoric acid monoesters, thiophosphoric acid diesters, thiophosphoric acid triesters, dithiophosphoric acid, dithiophosphoric acid monoesters, dithiophosphoric acid diesters, dithiophosphoric acid triesters, trithiophosphoric acid, trithiophosphoric acid monoesters, trithiophosphoric acid diesters, trithiophosphoric acid triesters, tetrathiophosphoric acid, tetrathiophosphoric acid monoesters, tetrathiophosphoric acid diesters, tetrathiophosphoric acid triesters, thiophosphorous acid, thiophosphorous acid monoesters, thiophosphorous acid diesters, thiophosphorous acid triesters, dithiophosphorous acid, dithiophosphorous acid monoesters, dithiophosphorous acid diesters, dithiophosphorous acid triesters, trithiophosphorous acid, trithiophosphorous acid monoesters, trithiophosphorous acid diesters, trithiophosphorous acid triesters, phosphoric (phosphorous) acid ester salts, and mixtures of the above.

The phosphorus compounds mentioned above, with the exception of phosphoric acid and phosphorous acid, are usually compounds containing C2-30 and preferably 3-20 hydrocarbon groups.

Specific examples of C2-30 hydrocarbon groups include alkyl groups such as ethyl, propyl, butyl, pentyl, hexyl, heptyl, octyl, nonyl, decyl, undecyl, dodecyl, tridecyl, tetradecyl, pentadecyl, hexadecyl, heptadecyl and octadecyl (which may be straight-chain or branched); alkenyl groups such as butenyl, pentenyl, hexenyl, heptenyl, octenyl, nonenyl, decenyl, undecenyl, dodecenyl, tridecenyl, tetradecenyl, pentadecenyl, hexadecenyl, heptadecenyl and octadecenyl (which may be straight-chain or branched, and may have any position of the double bonds); C5-7 cycloalkyl groups such as cyclopentyl, cyclohexyl and cycloheptyl; C6-11 alkylcycloalkyl groups such as methylcyclopentyl, dimethylcyclopentyl, methylethylcyclopentyl, diethylcyclopentyl, methylcyclohexyl, dimethylcyclohexyl, methylethylcyclohexyl, diethylcyclohexyl, methylcycloheptyl, dimethylcycloheptyl, methylethylcycloheptyl and diethylcycloheptyl (where the alkyl groups may be substituted at any position on the cycloalkyl groups); aryl groups such as phenyl and naphthyl: C7-18 alkylaryl groups such as tolyl, xylyl, ethylphenyl, propylphenyl, butylphenyl, pentylphenyl, hexylphenyl, heptylphenyl, octylphenyl, nonylphenyl, decylphenyl, undecylphenyl and dodecylphenyl (where the alkyl groups may be straight-chain or branched, and substituted at any position on the aryl groups); and C7-12 arylalkyl groups such as benzyl, phenylethyl, phenylpropyl, phenylbutyl, phenylpentyl and phenylhexyl (where the alkyl groups may be straight-chain or branched).

As zinc alkyldithiophosphates among these phosphorus compounds there are preferred zinc dipropyldithiophosphate, zinc dibutyldithiophosphate, zinc dipentyldithiophosphate, zinc dihexyldithiophosphate, zinc diheptyldithiophosphate, zinc dioctyldithiophosphate and the like. The alkyl groups of these compounds may be either straight-chain or branched.

As phosphoric acid monoesters there are preferred monoalkyl phosphate esters such as monopropyl phosphate, monobutyl phosphate, monopentyl phosphate, monohexyl phosphate, monopeptyl phosphate and monooctyl phosphate (where the alkyl groups may be straight-chain or branched), and monoaryl phosphate esters such as monophenyl phosphate and monocresyl phosphate.

As phosphoric acid diesters there are preferred dialkyl phosphate esters such as dipropyl phosphate, dibutyl phosphate, dipentyl phosphate, dihexyl phosphate, dipeptyl phosphate and dioctyl phosphate (where the alkyl groups may be straight-chain or branched), and diaryl phosphate esters such as diphenyl phosphate and dicresyl phosphate.

As phosphoric acid triesters there are preferred trialkyl phosphate esters such as tripropyl phosphate, tributyl phosphate, tripentyl phosphate, trihexyl phosphate, tripeptyl phosphate and trioctyl phosphate (where the alkyl groups may be straight-chain or branched), and triaryl phosphate esters such as triphenyl phosphate and tricresyl phosphate.

As phosphorous acid monoesters there are preferred monoalkyl phosphite esters such as monopropyl phosphite, monobutyl phosphite, monopentyl phosphite, monohexyl phosphite, monopeptyl phosphite and monooctyl phosphite (where the alkyl groups may be straight-chain or branched), and mono(alkyl)aryl phosphite esters such as monophenyl phosphite and monocresyl phosphite.

As phosphorous acid diesters there are preferred dialkyl phosphite esters such as dipropyl phosphite, dibutyl phosphite, dipentyl phosphite, dihexyl phosphite, dipeptyl phosphite and dioctyl phosphite, and diaryl phosphite esters such as diphenyl phosphite and dicresyl phosphite.

As phosphorous acid triesters there are preferred trialkyl phosphite esters such as tripropyl phosphite, tributyl phosphite, tripentyl phosphite, trihexyl phosphite, tripeptyl phosphite and trioctyl phosphite (where the alkyl groups may be straight-chain or branched), and triaryl phosphite esters such as triphenyl phosphite and tricresyl phosphite.

As thiophosphoric acid monoesters there are preferred monoalkyl thiophosphate esters such as monopropyl thiophosphate, monobutyl thiophosphate, monopentyl thiophosphate, monohexyl thiophosphate, monopeptyl thiophosphate, monooctyl thiophosphate and monolauryl thiophosphate (where the alkyl groups may be straight-chain or branched), and monoaryl thiophosphate esters such as monophenyl thiophosphate and monocresyl thiophosphate.

As thiophosphoric acid diesters there are preferred dialkyl thiophosphate esters such as dipropyl thiophosphate, dibutyl thiophosphate, dipentyl thiophosphate, dihexyl thiophosphate, dipeptyl thiophosphate, dioctyl thiophosphate and dilauryl thiophosphate (where the alkyl groups may be straight-chain or branched), and di((alkyl)aryl) thiophosphate esters such as diphenyl thiophosphate and dicresyl thiophosphate.

As thiophosphoric acid triesters there are preferred trialkyl thiophosphate esters such as tripropyl thiophosphate, tributyl thiophosphate, tripentyl thiophosphate, trihexyl thiophosphate, tripeptyl thiophosphate, trioctyl thiophosphate and trilauryl thiophosphate (where the alkyl groups may be straight-chain or branched), and tri((alkyl)aryl) thiophosphate esters such as triphenyl thiophosphate and tricresyl thiophosphate.

As dithiophosphoric acid monoesters there are preferred monoalkyl dithiophosphate esters such as monopropyl dithiophosphate, monobutyl dithiophosphate, monopentyl dithiophosphate, monohexyl dithiophosphate, monopeptyl dithiophosphate, monooctyl dithiophosphate and monolauryl dithiophosphate (where the alkyl groups may be straight-chain or branched), and monoaryl dithiophosphate esters such as monophenyl dithiophosphate and monocresyl dithiophosphate.

As dithiophosphoric acid diesters there are preferred dialkyl dithiophosphate esters such as dipropyl dithiophosphate, dibutyl dithiophosphate, dipentyl dithiophosphate, dihexyl dithiophosphate, dipeptyl dithiophosphate, dioctyl dithiophosphate and dilauryl dithiophosphate (where the alkyl groups may be straight-chain or branched), and diaryl dithiophosphate esters such as diphenyl dithiophosphate and dicresyl dithiophosphate.

As dithiophosphoric acid triesters there are preferred trialkyl dithiophosphate esters such as tripropyl dithiophosphate, tributyl dithiophosphate, tripentyl dithiophosphate, trihexyl dithiophosphate, tripeptyl dithiophosphate, trioctyl dithiophosphate and trilauryl dithiophosphate (where the alkyl groups may be straight-chain or branched), and triaryl dithiophosphate esters such as triphenyl dithiophosphate and tricresyl dithiophosphate.

As trithiophosphoric acid monoesters there are preferred monoalkyl trithiophosphate esters such as monopropyl trithiophosphate, monobutyl trithiophosphate, monopentyl trithiophosphate, monohexyl trithiophosphate, monopeptyl trithiophosphate, monooctyl trithiophosphate and monolauryl trithiophosphate (where the alkyl groups may be straight-chain or branched), and monoaryl dithiophosphate esters such as monophenyl trithiophosphate and monocresyl trithiophosphate.

As trithiophosphoric acid diesters there are preferred dialkyl dithiophosphate esters such as dipropyl trithiophosphate, dibutyl trithiophosphate, dipentyl trithiophosphate, dihexyl trithiophosphate, dipeptyl trithiophosphate, dioctyl trithiophosphate and dilauryl trithiophosphate (where the alkyl groups may be straight-chain or branched), and diaryl trithiophosphate esters such as diphenyl trithiophosphate and dicresyl trithiophosphate.

As trithiophosphoric acid triesters there are preferred trialkyl trithiophosphate esters such as tripropyl trithiophosphate, tributyl trithiophosphate, tripentyl trithiophosphate, trihexyl trithiophosphate, tripeptyl trithiophosphate, trioctyl trithiophosphate and trilauryl trithiophosphate (where the alkyl groups may be straight-chain or branched), and triaryl trithiophosphate esters such as triphenyl trithiophosphate and tricresyl trithiophosphate.

As tetrathiophosphoric acid monoesters there are preferred monoalkyl tetrathiophosphate esters such as monopropyl tetrathiophosphate, monobutyl tetrathiophosphate, monopentyl tetrathiophosphate, monohexyl tetrathiophosphate, monopeptyl tetrathiophosphate, monooctyl tetrathiophosphate and monolauryl tetrathiophosphate (where the alkyl groups may be straight-chain or branched), and monoaryl tetrathiophosphate esters such as monophenyl tetrathiophosphate and monocresyl tetrathiophosphate.

As tetrathiophosphoric acid diesters there are preferred dialkyl tetrathiophosphate esters such as dipropyl tetrathiophosphate, dibutyl tetrathiophosphate, dipentyl tetrathiophosphate, dihexyl tetrathiophosphate, dipeptyl tetrathiophosphate, dioctyl tetrathiophosphate and dilauryl tetrathiophosphate (where the alkyl groups may be straight-chain or branched), and diaryl tetrathiophosphate esters such as diphenyl tetrathiophosphate and dicresyl tetrathiophosphate.

As tetrathiophosphoric acid triesters there are preferred trialkyl tetrathiophosphate esters such as tripropyl tetrathiophosphate, tributyl tetrathiophosphate, tripentyl tetrathiophosphate, trihexyl tetrathiophosphate, tripeptyl tetrathiophosphate, trioctyl tetrathiophosphate and trilauryl tetrathiophosphate (where the alkyl groups may be straight-chain or branched), and triaryl tetrathiophosphate esters such as triphenyl tetrathiophosphate and tricresyl tetrathiophosphate.

As thiophosphorous acid monoesters there are preferred monoalkyl thiophosphite esters such as monopropyl thiophosphite, monobutyl thiophosphite, monopentyl thiophosphite, monohexyl thiophosphite, monopeptyl thiophosphite, monooctyl thiophosphite and monolauryl thiophosphite (where the alkyl groups may be straight-chain or branched), and monoaryl thiophosphite esters such as monophenyl thiophosphite and monocresyl thiophosphite.

As thiophosphorous acid diesters there are preferred dialkyl thiophosphite esters such as dipropyl thiophosphite, dibutyl thiophosphite, dipentyl thiophosphite, dihexyl thiophosphite, dipeptyl thiophosphite, dioctyl thiophosphite and dilauryl thiophosphite (where the alkyl groups may be straight-chain or branched), and diaryl thiophosphite esters such as diphenyl thiophosphite and dicresyl thiophosphite.

As thiophosphorous acid triesters there are preferred trialkyl thiophosphite esters such as tripropyl thiophosphite, tributyl thiophosphite, tripentyl thiophosphite, trihexyl thiophosphite, tripeptyl thiophosphite, trioctyl thiophosphite and trilauryl thiophosphite (where the alkyl groups may be straight-chain or branched), and triaryl thiophosphite esters such as triphenyl thiophosphite and tricresyl thiophosphite.

As dithiophosphorous acid monoesters there are preferred monoalkyl dithiophosphite esters such as monopropyl dithiophosphite, monobutyl dithiophosphite, monopentyl dithiophosphite, monohexyl dithiophosphite, monopeptyl dithiophosphite, monooctyl dithiophosphite and monolauryl dithiophosphite (where the alkyl groups may be straight-chain or branched), and monoaryl dithiophosphite esters such as monophenyl dithiophosphite and monocresyl dithiophosphite.

As dithiophosphorous acid diesters there are preferred dialkyl dithiophosphite esters such as dipropyl dithiophosphite, dibutyl dithiophosphite, dipentyl dithiophosphite, dihexyl dithiophosphite, dipeptyl dithiophosphite, dioctyl dithiophosphite and dilauryl dithiophosphite (where the alkyl groups may be straight-chain or branched), and diaryl dithiophosphite esters such as diphenyl dithiophosphite and dicresyl dithiophosphite.

As dithiophosphorous acid triesters there are preferred trialkyl dithiophosphite esters such as tripropyl dithiophosphite, tributyl dithiophosphite, tripentyl dithiophosphite, trihexyl dithiophosphite, tripeptyl dithiophosphite, trioctyl dithiophosphite and trilauryl dithiophosphite (where the alkyl groups may be straight-chain or branched), and triaryl dithiophosphite esters such as triphenyl dithiophosphite and tricresyl dithiophosphite.

As trithiophosphorous acid monoesters there are preferred monoalkyl trithiophosphite esters such as monopropyl trithiophosphite, monobutyl trithiophosphite, monopentyl trithiophosphite, monohexyl trithiophosphite, monopeptyl trithiophosphite, monooctyl trithiophosphite and monolauryl trithiophosphite (where the alkyl groups may be straight-chain or branched), and monoaryl trithiophosphite esters such as monophenyl trithiophosphite and monocresyl trithiophosphite.

As trithiophosphorous acid diesters there are preferred dialkyl trithiophosphite esters such as dipropyl trithiophosphite, dibutyl trithiophosphite, dipentyl trithiophosphite, dihexyl trithiophosphite, dipeptyl trithiophosphite, dioctyl trithiophosphite and dilauryl trithiophosphite (where the alkyl groups may be straight-chain or branched), and diaryl trithiophosphite esters such as diphenyl trithiophosphite and dicresyl trithiophosphite.

As trithiophosphorous acid triesters there are preferred trialkyl trithiophosphite esters such as tripropyl trithiophosphite, tributyl trithiophosphite, tripentyl trithiophosphite, trihexyl trithiophosphite, tripeptyl trithiophosphite, trioctyl trithiophosphite and trilauryl trithiophosphite (where the alkyl groups may be straight-chain or branched), and tri((alkyl)aryl) trithiophosphite esters such as triphenyl trithiophosphite and tricresyl trithiophosphite.

Specific examples of phosphoric (phosphorous) acid ester salts include salts obtained by reacting phosphoric acid monoesters, phosphoric acid diesters, phosphorous acid monoesters, phosphorous acid diesters and the like with metal bases such as alkali metals or alkaline earth metals, or with nitrogen-containing compounds such as ammonia or amine compounds containing only C1-8 hydrocarbon groups or hydroxyl-containing hydrocarbon groups in the molecule, to neutralize all or a portion of the remaining acidic hydrogens.

Specific examples of the aforementioned nitrogen-containing compounds include ammonia; alkylamines such as monomethylamine, monoethylamine, monopropylamine, monobutylamine, monopentylamine, monohexylamine, monoheptylamine, monooctylamine, dimethylamine, methylethylamine, diethylamine, methylpropylamine, ethylpropylamine, dipropylamine, methylbutylamine, ethylbutylamine, propylbutylamine, dibutylamine, dipentylamine, dihexylamine, diheptylamine and dioctylamine (where the alkyl groups may be straight-chain or branched); alkanolamines such as monomethanolamine, monoethanolamine, monopropanolamine, monobutanolamine, monopentanolamine, monohexanolamine, monoheptanolamine, monooctanolamine, monononanolamine, dimethanolamine, methanolethanolamine, diethanolamine, methanolpropanolamine, ethanolpropanolamine, dipropanolamine, methanolbutanolamine, ethanolbutanolamine, propanolbutanolamine, dibutanolamine, dipentanolamine, dihexanolamine, diheptanolamine and dioctanolamine (where the alkanol groups may be straight-chain or branched); as well as mixtures of the above.

According to the invention, any of the aforementioned phosphorus compounds may be used alone, or two or more thereof may be used in combination.

If the phosphorus compound used for the invention is a phosphorus compound with at least one C6-30 alkyl or alkenyl group in the molecule and containing no C31 or greater hydrocarbon groups in the molecule, or a compound contained in a derivative thereof, the lubricating oil composition of the invention can be simultaneously furnished with not only the aforementioned antiwear property but also frictional properties optimized for a wet clutch.

Preferred among the above-mentioned phosphorus compounds from the standpoint of more excellent frictional properties, are phosphorous acid, phosphorous acid monoesters, phosphorous acid diesters, phosphorous acid triesters, thiophosphorous acid monoesters, thiophosphorous acid diesters, thiophosphorous acid triesters, dithiophosphorous acid monoesters, dithiophosphorous acid diesters, dithiophosphorous acid triesters, trithiophosphorous acid monoesters, trithiophosphorous acid diesters, trithiophosphorous acid triesters, phosphoric (phosphorous) acid ester salts, and mixtures of the above.

In the lubricating oil composition of the invention it is essential that the content of phosphorus compound satisfy the conditions represented by formula (1) above. Specifically, the content of phosphorus compound is at least 0.01 % by mass, preferably at least 0.02 % by mass, more preferably at least 0.03 % by mass and even more preferably at least 0.04 % by mass, and no greater than 0.2 % by mass, preferably no greater than 0.15 % by mass, more preferably no greater than 0.12 % by mass, even more preferably no greater than 0.1 % by mass and most preferably no greater than 0.08 % by mass, in terms of phosphorus element, based on the total amount of the lubricating oil composition. If the content of phosphorus compound in terms of phosphorus element is less than 0.01 % by mass, the antiwear property and stick-slip prevention will be insufficient. Insufficient antiwear property will increase the concentration of wear debris generated in the oil, and the wear debris will react with the phosphorus compound(s) and the organic acid salts described hereunder thereby reducing the effective amounts of those components, and as a result impairing long-term maintenance of the antiwear property and stick-slip prevention. If the content of phosphorus compound in terms of phosphorus element exceeds 0.2 % by mass, improvement in the antiwear property and stick-slip prevention will not match the increased content, while reduction in the oxidation stability of the lubricating oil composition and adverse effects on the sliding members will arise. Lower oxidation stability promotes deterioration of the phosphorus compound(s) and organic acid salt described hereunder and reduces their effective amounts, thereby impairing long-term maintenance of the antiwear property and stick-slip prevention. Adverse effects on the sliding members will also reduce stick-slip prevention.

The lubricating oil composition of the invention also comprises at least one organic acid salt selected from among alkaline earth metal sulfonates, alkaline earth metal phenates and alkaline earth metal salicylates.

As specific examples of alkaline earth metal sulfonates there may be mentioned alkaline earth metal salts of alkylaromatic sulfonic acids obtained by sulfonation of alkyl aromatic compounds with molecular weights of 100-1500 and preferably 200-700, with magnesium salt and/or calcium salts being preferred, and as specific alkylaromatic sulfonic acids there may be mentioned "petroleum" sulfonic acids and synthetic sulfonic acids.

As petroleum sulfonic acids there may be used sulfonated alkyl aromatic compounds of ordinary mineral lube oil, and "mahogany acids" which are by-products of white oil production. As synthetic sulfonic acids there may be used sulfonated products of alkylbenzene compounds with straight-chain or branched alkyl groups, obtained as by-products from production plants for alkylbenzenes used as detergent starting materials or obtained by alkylation of polyolefins with benzene, and sulfonated dinonylnaphthalene. There are no particular restrictions on the sulfonating agent used for sulfonation of these alkyl aromatic compounds, but normally fuming sulfuric acid or sulfuric acid is used.

As alkaline earth metal phenates there are preferably used, specifically, alkaline earth metal salts of alkylphenol sulfides obtained by reaction of alkylphenols with elemental sulfur or of Mannich reaction products of alkylphenols obtained by reaction of alkylphenols with formaldehydes, where the alkylphenols have at least one C4-30 and preferably C6-18 straight chain or branched alkyl group, and especially magnesium salts and/or calcium salts.

As alkaline earth metal salicylates there are preferably used, specifically, alkaline earth metal salts of alkylsalicylic acids with at least one C4-30 and preferably C6-18 straight chain or branched alkyl group, and especially magnesium salts and/or calcium salts.

Alkaline earth metal sulfonates, alkaline earth metal phenates and alkaline earth metal salicylates also include those obtained by reaction of alkylaromatic sulfonic acids, alkylphenols, alkylphenol sulfides, alkylphenol Mannich reaction products, alkylsalicylic acids and the like directly with alkaline earth metal bases such as oxides or hydroxides of alkaline earth metals such as magnesium and/or calcium, or with not only neutral salts (normal salts) obtained by converting alkali metal salts such as sodium salts or potassium salts to alkaline earth metal salts, but also basic salts obtained by heating such neutral salts (normal salts) with excesses of alkaline earth metal salts or alkaline earth metal bases (hydroxides or oxides of alkaline earth metals) in the presence of water, or overbased salts (superbasic salts) obtained by reacting neutral salts (normal salts) with alkaline earth metal bases in the presence of carbon dioxide gas.

These reactions are usually carried out in a solvent (an aliphatic hydrocarbon solvent such as hexane, an aromatic hydrocarbon solvent such as xylene, a light lubricating base oil, or the like). Metal-based detergents are generally sold as solutions with light lubricating base oils and the like and are therefore available, but for most purposes the metal content is 1.0-20 % by mass and preferably 2.0-16 % by mass.

According to the invention, alkaline earth metal salicylates are preferred for use among the aforementioned organic acid salts, from the viewpoint of more excellent frictional properties.

The base value of the organic acid salt is not particularly restricted, but from the viewpoint of excellent frictional properties it is preferably 20-500 mgKOH/g and more preferably 50-450 mgKOH/g. If the base value of the organic acid salt is less than 20 mgKOH/g, the oxidation stability may be reduced and deterioration of the phosphorus compound(s) and organic acid salt will be accelerated as a result thereby reducing their effective amounts, such that long-term maintenance of the antiwear property and stick-slip prevention may be impaired. On the other hand, an organic acid salt with a base value of greater than 450 mgKOH/g is structurally unstable and the storage stability of the composition will thus be poor. The base value referred to here is the base value measured by a perchloric acid method based on section 7 of JIS K2501, "Petroleum products and lubricating oils - Neutralization value test methods".

In the lubricating oil composition of the invention it is essential that the organic acid salt content satisfy the condition represented by formula (2) above. Specifically, the organic acid salt content in terms of alkaline earth metal elements is 0.01 % by mass or greater, preferably 0.02 % by mass or greater and more preferably 0.03 % by mass or greater, and no greater than 0.2 % by mass, preferably no greater than 0.18 % by mass, more preferably no greater than 0.15 % mass, even more preferably no greater than 0.1 % by mass and most preferably no greater than 0.08 % by mass, in terms of alkaline earth metal elements, based on the total amount of the lubricating oil composition. If the organic acid salt content in terms of alkaline earth metal elements is less than 0.01 % by mass, the stick-slip prevention will be insufficient. An organic acid salt content in terms of alkaline earth metal elements that is greater than 0.2 % by mass will not provide any effect of improvement in the antiwear property and stick-slip prevention commensurate with the increased content, while it may reduce the oxidation stability of the lubricating oil composition, reduction in torque transmission capacity and have an adverse affect on the sliding members. Lower oxidation stability promotes deterioration of the phosphorus compound(s) and organic acid salt described above and reduces their effective amounts, thereby impairing long-term maintenance of the antiwear property and stick-slip prevention. Adverse effects on the sliding members will also tend to increase stick-slip.

The lubricating oil composition of the invention must also have phosphorus compound and organic acid salt contents that satisfy the conditions represented by formula (3) above. Specifically, the ratio $W(P)/W(M)$ of the content of phosphorus compound in terms of phosphorus element $W(P)$ and the organic acid salt content in terms of alkaline earth metal elements $W(M)$ must be at least 0.1, preferably at least 0.2 and more preferably at least 0.3, and must be no greater than 10, preferably no greater than 5 and more preferably no greater than 2, based on the total amount of the lubricating oil composition. If $W(P)/W(M)$ is less than 0.1, the antiwear property, stick-slip prevention and torque transmission capacity will be insufficient. Insufficient antiwear property will increase the concentration of wear debris generated in the oil, and the wear debris will react with the phosphorus compound(s) and the organic acid salts described hereunder thereby reducing the effective amounts of those components, and as a result impairing long-term maintenance of the antiwear property and stick-slip prevention. If $W(P)/W(M)$ exceeds 10, the stick-slip prevention will be insufficient and adverse effects may be exhibited on the sliding members. Adverse effects on the sliding members will also tend to increase stick-slip.

The lubricating oil composition of the invention may consist entirely of the aforementioned lubricating base oil, phosphorus compound(s) and organic acid salt, but for further improved performance it may also contain other additives as described hereunder.

The lubricating oil composition of the invention may additionally contain a viscosity index improver. Specific examples of viscosity index improvers include non-dispersant viscosity index improvers such as copolymers of one or more monomers selected from among various methacrylic acid esters, or their hydrogenated forms, and dispersant viscosity index improvers obtained by copolymerization of various methacrylic acid esters containing nitrogen compounds. Specific examples of other viscosity index improvers include non-dispersant or dispersant ethylene-α-olefin copolymers (where examples of α-olefins include propylene, 1-butene, 1-pentene and the like) and their hydrogenated compounds, polyisobutylene and its hydrogenated forms, styrene-diene hydrogenated copolymers, styrene-maleic anhydride ester copolymer and polyalkylstyrenes.

The molecular weights of such viscosity index improvers are preferably selected in consideration of shear stability. Specifically, for a dispersant or non-dispersant polymethacrylate as the viscosity index improver, the weight-average molecular weight is preferably 5,000-150,000 and more preferably 5,000-35,000. If the viscosity index improver is polyisobutylene or its hydrogenated compound, the weight-average molecular weight is preferably 800-5,000 and more preferably 1,000-4,000. If the viscosity index improver is an ethylene-α-olefin copolymer or its hydrogenated compound, the weight-average molecular weight is preferably 800-150,000 and more preferably 3,000-12,000.

Using ethylene-α-olefin copolymers or their hydrogenated compounds, among these viscosity index improvers, can yield lubricating oil compositions with particularly excellent shear stability.

According to the invention, any one of the aforementioned viscosity index improvers may be used alone, or two or more thereof may be used in combination. The content of the viscosity index improver is preferably 0.1-40.0 % by mass based on the total amount of the lubricating oil composition.

The lubricating oil composition of the invention may further contain an ashless dispersant. Such ashless dispersants may be any of the compounds commonly used as ashless dispersants for lubricating oils, and as examples there may be mentioned nitrogen-containing compounds with at least one C40-400 alkyl or alkenyl group in the molecule, and derivatives thereof, as well as modified alkenylsuccinimides.

The C40-400 alkyl or alkenyl group may be straight-chain or branched, and as preferred specific groups there may be mentioned branched alkyl or branched alkenyl groups derived from oligomers of olefins such as propylene, 1-butene and isobutylene or co-oligomers of ethylene and propylene.

The number of carbon atoms of the alkyl or alkenyl group is preferably 40-400 and more preferably 60-350, as mentioned above. If the number of carbon atoms of the alkyl or alkenyl group is less than 40 the solubility of the compound in the lubricating base oil will be reduced, while if the number of carbon atoms of the alkyl or alkenyl group is greater than 400, the low-temperature fluidity of the lubricating oil composition will be poor.

As specific examples of ashless dispersants which are nitrogen-containing compound, there may be mentioned acid-modified compounds obtained by reacting the aforementioned nitrogen-containing compounds with C2-30 monocarboxylic acids (fatty acids and the like) or with C2-30 polycarboxylic acids such as oxalic acid, phthalic acid, trimellitic acid and pyromellitic acid, to neutralize or amidate all or a portion of the remaining amino groups and/or imino groups ; boron-modified compounds obtained by reacting the aforementioned nitrogen-containing compounds with boric acid to neutralize or amidate all or a portion of the remaining amino groups and/or imino groups ; sulfur-modified compounds obtained by reacting the aforementioned nitrogen-containing compounds with sulfur compounds; and modified compounds obtained by combinations of two or more modifications selected from among acid-modification, boron modification and sulfur modification of the aforementioned nitrogen-containing compounds.

According to the invention, any one of these ashless dispersants may be used alone, or two or more thereof may be used in combination. The content of the ashless dispersant is preferably 0.1-10 % by mass based on the total amount of the lubricating oil composition.

The lubricating oil composition of the invention may further contain an extreme-pressure additive in addition to the phosphorus compound(s). As examples of such extreme-pressure additives there may be mentioned sulfur-based compounds such as disulfides, olefin sulfides and sulfurized fats and oils.

According to the invention, any one of the aforementioned extreme-pressure additives may be used alone, or two or more thereof may be used in combination. The content of the extreme-pressure additive in addition to the phosphorus compound(s) is preferably 0.01-5.0 % by mass based on the total amount of the lubricating oil composition.

The lubricating oil composition of the invention may further contain an antioxidant. Suitable antioxidants include any of those that are ordinarily used in lubricating oils, such as phenolic compounds and amine compounds. Specifically, there may be mentioned alkylphenols such as 2-6-di-tert-butyl-4-methylphenol, bisphenols such as methylene-4,4-bisphenol (2,6-di-tert-butyl-4-methylphenol), naphthylamines such as phenyl-α-naphthylamine, dialkyldiphenylamines, dialkylzinc dithiophosphates such as di-2-ethylhexylzinc dithiophosphate, and esters of (3,5-di-tert-butyl-4-hydroxyphenyl) fatty acids and alcohols. Among the constituent components of esters of (3,5-di-tert-butyl-4-hydroxyphenyl) fatty acids and alcohols, there may be mentioned (3,5-di-tert-butyl-4-hydroxyphenyl)propionic acid such as a (3,5-di-tert-butyl-4-hydroxyphenyl) fatty acid and monohydric or polyhydric alcohols such as methanol, octadecanol, 1,6-hexanediol, neopentyl glycol, thiodiethylene glycol, triethylene glycol and pentaerythritol as alcohols.

According to the invention, any one of the aforementioned antioxidants may be used alone, or two or more thereof may be used in combination. The content of the antioxidant is preferably 0.01-5.0 % by mass based on the total amount of the lubricating oil composition.

The lubricating oil composition of the invention may further contain a corrosion inhibitor. Suitable corrosion inhibitors include any of the compounds ordinarily used as corrosion inhibitors for lubricating oils, and as examples there may be mentioned benzotriazole-based, tolyltriazole-based, thiadiazole-based and imidazole-based compounds.

According to the invention, any one of these corrosion inhibitors may be used alone, or two or more thereof may be used in combination. The content of the corrosion inhibitor is preferably 0.01-3.0 % by mass based on the total amount of the lubricating oil composition.

The lubricating oil composition of the invention may further contain a friction modifier. Suitable friction modifiers include any of the compounds ordinarily used as friction modifiers for lubricating oils, among which there may be mentioned amine compounds, fatty acid esters, fatty acid amides and fatty acid metal salts that have at least one C6-30 alkyl or alkenyl group, and especially C6-30 straight-chain alkyl or straight-chain alkenyl group, in the molecule.

Examples of amine compounds include C6-30 straight-chain or branched, and preferably straight-chain, aliphatic monoamines, straight-chain or branched, and preferably straight-chain, aliphatic polyamines, and alkylene oxide addition products of these aliphatic amines. Examples of fatty acid esters include esters of C7-31 straight-chain or branched, and preferably straight-chain, fatty acids and aliphatic monohydric alcohols or aliphatic polyhydric alcohols. Examples of fatty acid amides include amides of C7-31 straight-chain or branched, and preferably straight-chain, fatty acids and aliphatic monoamines or aliphatic polyamines. As fatty acid metal salts there may be mentioned alkaline earth metal salts (magnesium salts, calcium salts, etc.) or zinc salts of C7-31 straight-chain or branched, and preferably straight-chain, fatty acids.

According to the invention, any one of the aforementioned friction modifiers may be used alone, or two or more thereof may be used in combination. The content of the friction modifier is preferably 0.01-5.0 % by mass and more preferably 0.03-3.0 % by mass based on the total amount of the lubricating oil composition.

The lubricating oil composition of the invention may further contain an antifoaming agent. Suitable antifoaming agents include any of the compounds ordinarily used as antifoaming agents for lubricating oils, and as examples there may be mentioned silicones such as dimethylsilicone and fluorosilicone.

According to the invention, any one of the aforementioned antifoaming agents may be used alone, or two or more thereof may be used in combination. The content of the antifoaming agent is preferably 0.001-0.05 % by mass based on the total amount of the lubricating oil composition.

There are no particular restrictions on the kinematic viscosity of the lubricating oil composition of the invention, but the kinematic viscosity at 100°C is preferably 2-20 mm$^2$/s, more preferably 3-15 mm$^2$/s and even more preferably 4-10 mm$^2$/s. The BF viscosity of the lubricating oil composition of the invention at -40°C is preferably no greater than 50,000 mPa·s, even more preferably no greater than 40,000 mPa·s, yet more preferably no greater than 30,000 mPa·s, even yet more preferably no greater than 20,000 mPa·s and most preferably no greater than 10,000 mPa·s.

The lubricating oil composition of the invention exhibits sufficient antiwear property and stick-slip prevention and can maintain a high level of these properties for prolonged periods. The lubricating oil composition of the invention can therefore exhibit a particularly excellent effect as a lubricating oil especially for vehicle driving force transmitting systems, and can also be used as a lubricating oil for internal combustion engines, a hydraulic oil for dampers, a compressor oil, or the like, at a variety of different lubrication sites for many other purposes. The lubricating oil composition of the invention exhibits its effect in a particularly notable fashion when used between the sliding surfaces of sliding members consisting mainly of iron, but there is no particular restriction on the material of the sliding member to which it is applied, and it may be used as a lubricating oil between a wide variety of sliding surface materials. A unique effect is exhibited by the lubricating oil composition of the invention when it is used for lubrication on the sliding surfaces of sliding members having amorphous hard carbon films.

As driving force transmitting systems in which the lubricating oil composition of the invention is to be used, there may be mentioned driving force distribution/regulating mechanisms and transmission devices such as manual transmissions, automatic transmissions and continuously variable transmissions, but preferred among these are driving force distribution/regulating mechanisms, automatic transmissions and continuously variable transmissions, and the excellent effect of the invention is maximally exhibited when used in a driving force distribution/regulating mechanism.

As driving force distribution/regulating mechanisms in which the lubricating oil composition of the invention is to be used there may be mentioned LSD (limited slip differentials) which limit the differential between left and right wheels of a vehicle, RBC (rotary blade couplings) which accomplish frictional engagement of the clutch disc by hydraulic pressure of a rotor that is activated by the difference in the rotations of the input shaft and output shaft of the driving force, and electronic control couplings that allow electronic control of the frictional engaging force of the clutch disc that transmits driving force, based on current flowing to the magnetic coil, and among these, the excellent effect of the invention is maximally exhibited when used in a wheel distribution mechanism and especially an electronic control coupling, thereby allowing improvement in the durability of the device and realizing satisfactory ride quality for 4-wheel drive vehicles.

A method of operating an electronic control coupling using a lubricating oil composition of the invention will now be explained with reference to Fig. 1. Fig. 1 is an essential cross-sectional view showing an example of an electronic control coupling, where the electronic control coupling (hereinafter referred to as "driving force transmitting system") 10 is cut at the plane including the axial line of the output shaft. The essential parts of the driving force transmitting system 10 have a symmetrical configuration around the axial line, and therefore Fig. 1 shows only approximately half of the driving force transmitting system 10 while omitting the other half.

The drive transmission device shown in Fig. 1 comprises an outer case 10a, inner shaft 10b, main clutch 10c, pilot clutch mechanism 10d and cam mechanism 10e.

The outer case 10a of the driving force transmitting system 10 is formed of a closed-bottom tubular housing 11a and a rear cover 11b that is screw fitted on the opening at the rear end of the housing 11 a and covers the same opening. The housing 11 a is formed of an aluminum alloy which is a non-magnetic material, while the rear cover 11b is formed of iron which is a magnetic material. The rear cover 11b has a stainless steel cylinder 11c as a non-magnetic material embedded at its center, and the cylinder 11c forms an annular non-magnetic section.

The inner shaft 10b is coaxially inserted in the outer case 10a and passes through the center of the rear cover 11b in a fluid-tight manner, while being rotatably supported on the housing 11a and rear cover 11b with the axial direction controlled. The space defined in a fluid-tight manner by the outer case 10a and inner shaft 10b is filled with a lubricating oil composition of the invention. The lubricating oil composition does not need to be replaced by maintenance.

In the inner shaft 10b there is inserted the end of a second propeller shaft (not shown) linked to a differential device at the rear wheel side which is the coupled driving wheel, in a manner allowing transmission of torque. At the front end of the housing 11a of the outer case 10a there is linked a first propeller shaft (not shown), linked to the output shaft of the transmission that changes speed of the engine output, in a manner allowing transmission of torque. The torque of the output shaft of the transmission is continuously transmitted by a separate mechanism to the front wheels which serve as the main drive wheels.

The main clutch 10c is a wet multiple-disc type friction clutch, and it is provided with a plurality of iron clutch plates (main inner clutch plates 12a, main outer clutch plates 12b) and is situated in the housing 11 a. Each main inner clutch plate 12a of the main clutch 10c is assembled so as to be spline-fitted around the outer periphery of the inner shaft 10b in a manner allowing its movement in the axial direction, while each main outer clutch plate 12b is assembled so as to be spline-fitted around the inner periphery of the housing 11 a in a manner allowing its movement in the axial direction. Each main inner clutch plate 12a and each main outer clutch plate 12b are alternately situated, and in contact with each other for frictional engagement while also being freely cleared from each other.

While not shown in detail here, the main inner clutch plate 12a has a paper wet friction material attached to the section in sliding contact with the main outer clutch plate 12b. The paper wet friction material may be, for example, one obtained by sheet making using a fiber base material such as wood pulp or aramid fibers and a friction modifier such as cashew dust or a constitutional filler or other filler such as calcium carbonate or diatomaceous earth, to prepare paper stock, and then impregnating the paper stock with a resin binder composed of a thermosetting resin and heat curing it by heat molding.

The pilot clutch mechanism 10d comprises an electromagnet 13, pilot clutch 14, armature 15 and yoke 16. The electromagnet 13 has an annular form, and it is fitted in an annular recess 11d of the rear cover 11b which is fitted over the yoke 16. The yoke 16 is anchored to the vehicle side while being supported in a rotatable manner by a bearing on the outer periphery of the rear end of the rear cover 11 b.

The pilot clutch 14 is a wet multiple-disc friction clutch composed of a plurality of pilot outer clutch plates 14a and pilot inner clutch plates 14b, and each pilot outer clutch plate 14a is assembled so as to be spline-fitted around the inner periphery of the housing 11 a in a manner allowing its movement in the axial direction, while each pilot inner clutch plate 14b is assembled so as to be spline-fitted around the outer periphery of the first cam member 17a composing the cam mechanism 10e described hereunder, in a manner allowing its movement in the axial direction. The pilot inner clutch plate 14b consists mainly of iron, and the sliding surface of each pilot inner clutch plate 14b has a plurality of fine grooves (for example, of 3-20 $\mu$m depth) aligned at fine spacings (for example, 100-300 $\mu$m) along the circumferential direction, and formed on concentric circles. The pilot outer clutch plate 14a has an iron base, and its sliding surface is covered with the amorphous hard carbon film described hereunder. The sliding surface of the pilot outer clutch plate 14a has lattice-like lubrication grooves formed therein for circulation of the lubricating oil.

The armature 15 has an annular form, and it is assembled so as to be spline-fitted in the inner periphery of the housing 11a in a manner allowing its movement in the axial direction, and it is positioned on the opposite side of the electromagnet 13, sandwiching the pilot clutch 14.

In the pilot clutch mechanism 10d having this construction, electrification of the magnetic coil by the electromagnet 13 forms a loop-shaped circulating magnetic path X through which flows the flux circulating through the yoke 16, rear cover 11b and each clutch plate and armature 15 of the pilot clutch 14, with the electromagnet 13 as the base point. The electrification current of the electromagnet 13 is controlled to a prescribed current value set by the duty control. A plurality of arc-shaped grooves are formed at positions corresponding to the cylinder 11c of each clutch plate of the pilot clutch 14, and shorting of flux is thereby prevented.

Interruption of current to the magnetic coil of the electromagnet 13 is accomplished by activation of a switch which allows selection of the three driving modes described hereunder. The switch is situated near the driver seat in the vehicle to allow easy operation by a driver. If the driving force transmitting system 10 consists entirely of the second driving mode described hereunder, the switch may be omitted.

The cam mechanism 10e is composed of a first cam member 17a, second cam member 17b and cam follower 17c. The first cam member 17a is fitted in a rotatable manner around the outer periphery of the inner shaft 10b while being supported in a rotatable manner on the rear cover 11b, with the pilot inner clutch plate 14b spline-fitted on its outer periphery. The second cam member 17b is assembled so as to be spline-fitted around the outer periphery of the inner shaft 10b in an integral rotatable manner, and it is positioned opposite the rear side of the main inner clutch plate 12a of the main clutch mechanism 10c. A ball-shaped cam follower 17c lies in the cam groove opposite both the first cam member 17a and second cam member 17b.

When the magnetic coil of the electromagnet 13 forming the pilot clutch mechanism 10d is in a non-electrified state in the driving force transmitting system 10 having this construction, no magnetic path is formed and the friction clutch 14 is disengaged. Consequently, the pilot clutch mechanism 10d is in an inactivated state, the first cam member 17a composing the cam mechanism 10e is integrally rotatable with the second cam member 17b via the cam follower 17c, and the main clutch 10c is in an inactivated state. Thus, the vehicle is in first driving mode, which is two-wheel drive.

On the other hand, upon electrification of the magnetic coil of the electromagnet 13, a loop-shaped circulating magnetic path X is formed in the pilot clutch mechanism 10d with the electromagnet 13 as the base point, thus forming magnetic force, so that the electromagnet 13 attracts the armature 15. The armature 15 thereupon presses against the friction clutch 14 and frictionally engages therewith. The relative rotational torque between the housing 11 a and inner shaft 10b acts to cause relative rotation of the first cam member 17a and second cam member 17b. As a result, the cam follower 17c presses in a direction which freely clears both cam members 17a,17b in the cam mechanism 10e.

Consequently, the second cam member 17b moves with pressure toward the main clutch 10c side, causing the main clutch 10c to be pressed by the back wall section of the housing 11a, and to be frictionally engaged in response to the frictional engaging force of the friction clutch 14. This produces transmission of torque between the outer case 10a and the inner shaft 10b, so that the vehicle is in second driving mode, which is 4-wheel drive, wherein the first propeller shaft and second propeller shaft are between an incomplete coupled state and an direct-coupled state. In this driving mode, the distribution ratio of driving force between the front and rear wheels can be controlled in a range of 100:0 (2-wheel drive state) to the direct-coupled state, in response to the running state of the vehicle.

In the second driving mode, the electrification current to the magnetic coil is under duty control in response to the vehicle running state or the road surface condition, based on the signal from a sensor such as a wheel speed sensor, throttle position sensor or steering wheel angle sensor, so that the frictional engaging force of the friction clutch 14, i.e. the transmission torque to the rear wheel end, is controlled.

Increasing the electrification current to the magnetic coil of the electromagnet 13 to a prescribed value increases the attraction force for the armature 15 of the electromagnet 13, so that the armature 15 is strongly attracted and the frictional engaging force of the friction clutch 14 is increased, thereby increasing the relative rotation between both cam members 17a, 17b. As a result, the cam follower 17c increases the pressing force against the second cam member 17b, bringing the main clutch mechanism 10c into a coupled state. Consequently, the vehicle is in a third driving mode which is 4-wheel drive wherein the first propeller shaft and second propeller shaft are in a direct-coupled state.

In the driving force transmitting system 10 described above, the copper ring 18 is fitted into the recess 11d of the rear cover 11b, and is positioned on the inside of the loop-shaped magnetic path X by the front end of the electromagnet 13. When the electrification current to the magnetic coil of the electromagnet 13 is controlled to a prescribed current value by the duty control, a counter voltage is generated at the copper ring 18 due to fluctuation in the flux $\varphi$ number in the magnetic path X, thus generating a current in the direction opposite to that of current fluctuation of the magnetic coil (reverse current). This reverse current acts to cancel out fluctuation in the electrification current, thereby reducing the width of repeated fluctuation of the electrification current.

The amorphous hard carbon film formed on the surface of the pilot outer clutch plate 14a will now be explained. The amorphous hard carbon film is an amorphous hard carbon film consisting mainly of carbon. The amorphous hard carbon film may be formed by publicly known CVD (Chemical Vapor Deposition) or PVD (Physical Vapor Deposition).

The pilot outer clutch plate 14a is subjected to nitriding treatment over the entire surface of the base material as ground layer treatment, thereby forming a nitrided layer. The presence of the nitrided layer improves the adhesiveness of the amorphous hard carbon film. The thickness of the nitrided layer is set to 2-6 $\mu$m as the optimum value.

The amorphous hard carbon film of this embodiment contains silicon (Si) (hereinafter this thin-film will be referred to as the "DLC-Si film"). The thickness of the DLC-Si film is approximately 3 $\mu$m, and it has a hardness of about 2000 Hv. The silicon content of the DLC-Si film may be set within a range of 1-80 % by mass, but it is preferably 5-50 % by mass and more preferably 10-40 % by mass.

The properties of amorphous hard carbon films include a low counterpart impact property and high coefficient of friction in lubricating oils. Since the low counterpart impact property reduces wear on the counterpart material (the pilot inner clutch plate 14b) during frictional engagement, it is possible to adequately control generation of iron wear debris and thus highly effectively prevent deterioration of the lubricating oil. When the amorphous hard carbon film undergoes frictional sliding with the counterpart material in the lubricating oil composition of the invention, the lower counterpart impact property also reduces loss and wear of the additives adsorbed onto the counterpart material, thereby preventing deterioration of the lubricating oil to an even higher degree.

The surface roughness of the amorphous hard carbon film is preferably 0.3-10 $\mu$mRz (average roughness at 10 points according to JIS B 0601). A surface roughness of less than 0.3 $\mu$mRz may lead to oil film formation on the amorphous hard carbon film, making it difficult to achieve the prescribed frictional coefficient. A surface roughness of greater than 10 $\mu$mRz will increase the impact on the frictional sliding counterpart material, thereby tending to shorten the durable life. From the viewpoint of more reliably ensuring both an adequate frictional coefficient and a low counterpart impact property, the surface roughness of the amorphous hard carbon film is most preferably 2-6 $\mu$mRz.

When this type of driving force transmitting system 10 is activated, having the lubricating oil composition of the invention present at sliding sections between the various sliding members composing the main clutch mechanism 10c, the pilot clutch mechanism 10d and the cam mechanism 10e can satisfactorily improve the antiwear property and stick-slip prevention. In particular, driving force transmitting systems (electronic control couplings) with smaller sizes and weights are more susceptible to wear debris because of the reduced amount of filled lubricating oil, but with the driving force transmitting system (electronic control coupling) according to this embodiment, the excellent properties of the lubricating oil composition of the invention described above can sufficiently inhibit reduction in the long-term maintenance of antiwear property and stick-slip prevention that occurs due to increasing concentration of wear debris in the oil.

One of the features of the lubricating oil composition of the invention is low viscosity at low temperature compared to conventional lubricating oils. Because of this low temperature viscosity characteristic, when the lubricating oil composition of the invention is applied in the 4-wheel drive vehicle drive transmission device (electronic control coupling) described above, it is possible to achieve suitable control of the driving force distribution ratio of the front and rear wheels even at low temperature, so that anti-lock braking systems and running stability control systems can satisfactorily exhibit their functions. In addition, it is possible to reduce the sliding torque (driving force caused by a condition wherein, despite a lack of current flow to the magnetic coil, the clutch becomes engaged due to the viscosity of the lubricating oil and the driving force is transmitted to the rear wheels) at low temperature.

Examples

The present invention will now be explained in greater detail based on examples and comparative examples, with the understanding that these examples are in no way limitative on the invention.

[Reference Examples 1 to 4, Examples 5 and 6, Comparative Examples 1-4]

For Reference Examples 1 to 4, Examples 5 and 6 and Comparative Examples 1-4, the lubricating base oils and additives mentioned below were used to prepare lubricating oil compositions having the compositions listed in Tables 1 and 2.

(Lubricating base oils)

Base oil 1: Poly-$\alpha$-olefin (100°C kinematic viscosity: 4 $mm^2$/s, viscosity index: 125)
Base oil 2: Hydrocracked mineral oil (100°C kinematic viscosity: 4 $mm^2$/s, viscosity index: 125, %Cp: 79)
Base oil 3: Solvent-refined mineral oil (100°C kinematic viscosity: 4 $mm^2$/s, viscosity index: 95, %Cp: 67)

(Phosphorus compound)

A1: Di-2-ethylhexyl phosphite (phosphorus content: 10.1 % by mass) (Organic acid salts)
B1: Calcium salicylate (base value: 170 mgKOH/g)
B2: Calcium sulfonate (base value: 300 mgKOH/g)

(Other additives)

C1: Polymethacrylate viscosity index improver (weight-average molecular weight: 50,000)
C2: Additive package (dispersant: 60 % by mass, antioxidant: 2 % by mass, corrosion inhibitor: 1 % by mass, rubber swelling agent: 6 % by mass, antifoaming agent: 0.02 % by mass, friction modifier: 10 % by mass, carrier oil: remainder)

The lubricating oil compositions of Examples 1-6 and Comparative Examples 1-4 were subjected to the following evaluation testing.

(1) Evaluation of antiwear property(four ball test)

A four ball test was conducted under the following conditions according to ASTM D 4172, and the wear scar diameter (mm) was measured for evaluation of the antiwear property. The results are shown in Tables 1 and 2.

Load: 294 N
Rotation rate: 180 rpm
Testing time: 30 minutes

(2) Evaluation of stick-slip prevention (durability test)

A durability test was conducted with a differential charge energy of 350 W for the driving force transmitting system (electronic control coupling) of the embodiment described above and with adjustment to maintain a device surface temperature of 120°C using cooling air, and the time until occurrence of the stick-slip phenomenon was measured. The obtained results are shown in Tables 1 and 2, as relative values with respect to 1 as the time until occurrence of the stick-slip phenomenon in Comparative Example 1.

(3) Evaluation of low temperature startability (actual running test)

The driving force transmitting system (electronic control coupling) of the embodiment described above was subjected to a 10-second sweep in an environment of -40°C, with a differential rotation rate from 0 rpm to 200 rpm, and the maximum value for the sliding torque during that time was measured. The through current of the magnetic coil was 0 A. The sliding torques when using the lubricating oil compositions of the examples and comparative examples are shown in Tables 1 and 2, as relative values with respect to 1 as the sliding torque for Comparative Example 1.

[Table 1]

| | | Reference Example 1 | Reference Example 2 | Reference Example 3 | Reference Example 4 | Example 5 | Example 6 |
|---|---|---|---|---|---|---|---|
| Base oil composition (based on total base oil) [% by mass] | Base oil 1 | - | - | - | 80 | 100 | 100 |
| | Base oil 2 | 80 | 80 | 80 | 16 | - | - |
| | Base oil 3 | 20 | 20 | 20 | 4 | - | - |
| Lubricat ing composition (based on total B1 composition)[% by mass] | Base oil | remainder | remainder | remainder | remainder | remainder | remainder |
| | A1 | 0.6 | 0.6 | 0.8 | 0.6 | 0.6 | 0.6 |
| | B1 | 1.6 | 0.8 | 0.6 | 0.8 | - | 0.8 |
| | B2 | - | - | - | - | 0.4 | - |
| | C1 | 7.0 | 7.0 | 7.0 | - | - | - |
| | C2 | 5.0 | 5.0 | 5.0 | 5.0 | 5.0 | 5.0 |
| W(P) [% by mass] | | 0.06 | 0.06 | 0.08 | 0.06 | 0.06 | 0.06 |
| W(M)[H by mass] | | 0.10 | 0.05 | 0.04 | 0.05 | 0.05 | 0.05 |
| W(P)/W(M) | | 0.6 | 1.2 | 2.0 | 1.2 | 1.2 | 1.2 |
| Kinematic viscosity at.100°C [mm$^2$/s] | | 7.0 | 7.0 | 7.0 | 4.8 | 4.8 | 4.8 |
| BF viscosity (-40°C) [mPa·s] | | 12500 | 12300 | 12500 | 4900 | 4300 | 4300 |
| Four ball test (Wear scar diameter [mm]) | | 0.39 | 0.40 | 0.38 | 0.39 | 0.38 | 0.38 |
| Durability test (stick-slip prevention) | | 1.75 | 2.25 | 2.00 | 2.50 | 1.75 | 3.33 |
| Actual running test (sliding torque) | | 1.0 | 1.0 | 1.0 | 0.6 | 0.6 | 0.6 |

[Table 2]

| | | Comp. Ex. 1 | Comp. Ex. 2 | Comp. Ex. 3 | Comp. Ex. 4 |
|---|---|---|---|---|---|
| Base oil composition (based on total base oil) [% by mass] | Base oil 1 | - | - | - | - |
| | Base oil 2 | 80 | 80 | 80 | 80 |
| | Base oil 3 | 20 | 20 | 20 | 20 |
| Lubricating oil composition (based on total composition) % by mass] | Base oil | remainder | remainder | remainder | remainder |
| | A1 | 3.0 | 0.6 | 0.1 | 2.0 |
| | B1 | 1.6 | 4.8 | 3.2 | 0.2 |
| | B2 | - | - | - | - |
| | C1 | 7.0 | 7.0 | 7.0 | 7.0 |
| | C2 | 3.0 | 3.0 | 3.0 | 3.0 |
| W(P) [% by mass] | | 0.30 | 0.06 | 0.01 | 0.20 |
| W(M) [% by mass] | | 0.10 0 | 0.30 | 0.20 | 0.01 |
| W(P)/W(M) | | 3.00 | 0.20 | 0.05 | 20.0 |
| Kinematic viscosity at 100°C [mm$^2$/s] | | 7.0 | 7.0 | 7.0 | 7.0 |
| BF viscosity (-40°C) [mPa·s] | | 12300 | 12500 | 12500 | 12500 |
| Four ball test (Wear scar diameter [mm]) | | 0.39 | 0.40 | 0.38 | 0.39 |
| Durability test (stick-slip prevention) | | 1.00 | 1.25 | 0.66 | 0.30 |
| Actual running test (sliding torque) | | 1.0 | 1.0 | 1.0 | 1.0 |

**Claims**

1. A driving force transmitting system wherein driving force is transmitted by sliding of a sliding member consisting mainly of iron,
the driving force transmitting system being **characterized in that** a lubricating oil composition exists on the sliding surface of the sliding member, wherein the lubricating oil composition comprises a lubricating base oil, a phosphorus compound and at least one organic acid salt selected from among alkaline earth metal sulfonates, alkaline earth metal phenates and alkaline earth metal salicylates,
wherein the contents of the phosphorus compound and organic acid salt satisfy the conditions represented by the following formulas (1), (2) and (3):

$$0.01 \leq W(P) \leq 0.2 \text{ \% by mass} \qquad (1)$$

$$0.01 \leq W(M) \leq 0.2 \text{ \% by mass} \qquad (2)$$

$$0.1 \leq W(P) / W(M) \leq 10 \qquad (3)$$

wherein W(P) represents the content of phosphorus compound, in terms of phosphorus element, based on the total amount of the lubricating oil composition, and W(M) represents the content of organic acid salt, in terms of alkaline earth metal elements, based on the total amount of the lubricating oil composition,
**characterized in that** the lubricating base oil consists of at least 90 % by mass of a poly-α-olefin and/or its hydrogenated compound, based on the total amount of the lubricating base oil.

2. The driving force transmitting system according to claim 1, **characterized in that** the lubricating oil composition has a kinematic viscosity at 100°C of 2-20 mm$^2$/s.

3. The driving force transmitting system according to claim 1 or 2, wherein driving force is transmitted by sliding between a sliding member having an amorphous hard carbon film formed on the surface of a base material and a sliding member consisting mainly of iron.

4. The driving force transmitting system according to claim 3, **characterized in that** the amorphous hard carbon film contains 1-80 % by mass of silicon.

5. The driving force transmitting system according to claim 3 or 4, **characterized in that** the surface roughness on the sliding surface side of the amorphous hard film is 0.3-10 μmRz.

**Patentansprüche**

1. Antriebskraftübertragungssystem, wobei die Antriebskraft durch Gleiten eines Gleitbauteils, das hauptsächlich aus Eisen besteht, übertragen wird,
wobei das Antriebskraftübertragungssystem **dadurch gekennzeichnet ist, dass** eine Schmierölzusammensetzung auf der Gleitoberfläche des Gleitbauteils existiert, wobei die Schmierölzusammensetzung ein Schmierbasisöl, eine Phosphorverbindung und mindestens ein organisches Säuresalz, ausgewählt aus Erdalkalimetallsulfonaten, Erdalkalimetallphenaten und Erdalkalimetallsalicylaten, umfasst,
wobei die Gehalte der Phosphorverbindung und des organischen Säuresalzes die Bedingungen, die durch die folgenden Formeln (1), (2) und (3) dargestellt sind, erfüllen:

$$0,01 \leq W(P) \leq 0,2 \text{ Gew.\%} \quad (1)$$

$$0,01 \leq W(M) \leq 0,2 \text{ Gew.\%} \quad (2)$$

$$0,1 \leq W(P) / W(M) \leq 10 \quad (3)$$

wobei W(P) den Gehalt der Phosphorverbindung im Hinblick auf das Element Phosphor darstellt, basierend auf der Gesamtmenge der Schmierölzusammensetzung, und W(M) den Gehalt an organischem Säuresalz im Hinblick auf Erdalkalimetallelemente darstellt, basierend auf der Gesamtmenge der Schmierölzusammensetzung,
**dadurch gekennzeichnet, dass** das Schmierbasisöl aus mindestens 90 Gew.-% eines Poly-α-olefins und/oder dessen hydrierter Verbindung besteht, basierend auf der Gesamtmenge des Schmierbasisöls.

2. Antriebskraftübertragungssystem nach Anspruch 1, **dadurch gekennzeichnet dass** die Schmierölzusammensetzung eine kinematische Viskosität bei 100°C von 2 bis 20 mm$^2$/s besitzt.

3. Antriebskraftübertragungssystem nach Anspruch 1 oder 2, wobei die Antriebskraft durch Gleiten zwischen einem Gleitbauteil mit einem amorphen harten Kohlenstofffilm, der auf der Oberfläche eines Basismaterials aufgebracht ist, und einem Gleitbauteil bestehend hauptsächlich aus Eisen übertragen wird.

4. Antriebskraftübertragungssystem nach Anspruch 3, **dadurch gekennzeichnet, dass** der amorphe harte Kohlenstofffilm 1 bis 80 Gew.% Silizium enthält.

5. Antriebskraftübertragungssystem nach Anspruch 3 oder 4, **dadurch gekennzeichnet, dass** die Oberflächenrauheit auf der Gleitoberflächenseite des amorphen harten Films 0,3 bis 10 μmRz beträgt.

**Revendications**

1. Système de transmission de force d'entraînement dans lequel une force d'entraînement est transmise par glissement d'un élément glissant principalement constitué de fer,

le système de transmission de force d'entraînement étant **caractérisé en ce qu'**une composition d'huile lubrifiante existe sur la surface glissante de l'élément glissant, dans lequel la composition d'huile lubrifiante comprend une huile de base lubrifiante, un composé phosphoré et au moins un sel d'acide organique choisi parmi des sulfonates de métaux alcalino-terreux, des phénates de métaux alcalino-terreux et des salicylates de métaux alcalino-terreux, dans lequel les teneurs en composé phosphoré et en sel d'acide organique satisfont aux conditions représentées par les formules (1), (2) et (3) suivantes :

$$0,01 \leq W(P) \leq 0,2 \text{ \% en masse} \quad (1)$$

$$0,01 \leq W(M) \leq 0,2 \text{ \% en masse} \quad (2)$$

$$0,1 \leq W(P)/W(M) \leq 10 \quad (3)$$

dans lesquelles W(P) représente la teneur en composé phosphoré, en termes d'élément phosphoré, basée sur la quantité totale de la composition d'huile lubrifiante, et W(M) représente la teneur en sel d'acide organique, en termes d'éléments de métaux alcalino-terreux, basée sur la quantité totale de la composition d'huile lubrifiante,

**caractérisé en ce que** l'huile de base lubrifiante est constituée d'au moins 90 % en masse d'une α-polyoléfine et/ou de son composé hydrogéné, sur la base de la quantité totale d'huile de base lubrifiante.

2. Système de transmission de force d'entraînement selon la revendication 1, **caractérisé en ce que** la composition d'huile lubrifiante présente une viscosité cinématique à 100 °C de 2 à 20 mm$^2$/s.

3. Système de transmission de force d'entraînement selon la revendication 1 ou 2, dans lequel la force d'entraînement est transmise par glissement entre un élément glissant présentant un film de carbone dur amorphe formé sur la surface d'une matière de base et un élément glissant principalement constitué de fer.

4. Système de transmission de force d'entraînement selon la revendication 3, **caractérisé en ce que** le film de carbone dur amorphe contient de 1 à 80 % en masse de silicium.

5. Système de transmission de force d'entraînement selon la revendication 3 ou 4, **caractérisé en ce que** la rugosité de surface sur le côté de surface glissant du film dur amorphe est de 0,3 à 10 μmRz.

Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1422287 A
- US 20040192562 A
- EP 1367279 A
- EP 1571365 A
- JP 2003065359 A